# FASCICULE DE BREVET EUROPEEN

(11) **EP 3 350 581 B1**
(45) Date de publication et mention de la délivrance du brevet: **08.11.2023**
(21) Numéro de dépôt: 16775781.4
(22) Date de dépôt: 05.09.2016
(51) Int. Cl.: G01N 21/93, G06T 7/00, H05K 13/08, G01N 21/956, H04N 23/63, H04N 23/90

(54) **MIRE D'ETALONNAGE OU DE TEST**
KALIBRIER- ODER TESTMUSTER
CALIBRATION OR TEST PATTERN

(30) Priorité: 15.09.2015 FR 1558603
(43) Date de publication de la demande: 25.07.2018
(73) Titulaire: VIT, 38120 Saint-Egreve (FR)
(72) Inventeur: PERRIOLLAT, Mathieu, 38120 Saint-Egreve (FR)
(74) Mandataire: Cabinet Beaumont
(86) Numéro de dépôt international: PCT/FR2016/052199
(87) Numéro de publication internationale: WO 2017/046475

(56) Documents cités:
- WO-A1-2014/167248
- DE-A1-102013 014 475
- US-A1- 2004 233 290
- US-A1- 2015 103 147
- US-B1- 8 542 267

## Description

La présente demande de brevet revendique la priorité de la demande de brevet français FR15/58603

### Domaine

La présente description concerne, de façon générale, les systèmes de prise de vues et, plus particulièrement, les installations d'inspection optique, par exemple de cartes électroniques. La présente description concerne une mire, notamment pour l'étalonnage et/ou le test d'une telle installation.

### Exposé de l'art antérieur

Plusieurs paramètres de fonctionnement d'une installation d'inspection optique doivent être déterminés par des procédés d'étalonnage et/ou de test qui peuvent requérir l'utilisation de mires, chaque mire comprenant un support sur une face duquel sont formées des marques de formes et de dimensions adaptées aux paramètres à étalonner. Un exemple concerne la détermination des paramètres géométriques intrinsèques et extrinsèques des caméras de l'installation d'inspection optique qui utilise un mire d'étalonnage qui peut comprendre un damier bicolore alternant des cases blanches et des cases d'une autre couleur. Un autre exemple concerne l'évaluation de la netteté des caméras de l'installation optique qui utilise une mire d'étalonnage qui peut comprendre une alternance de bandes blanches et noires. Un autre exemple concerne l'étalonnage du système de déplacement des caméras de l'installation optique qui utilise un mire d'étalonnage comprenant une plaque de verre sur laquelle sont formés des motifs.

De façon générale, plus la résolution du paramètre doit être précise, plus la mire d'étalonnage doit elle-même être précise ou plus les calculs de détermination des paramètres deviennent complexes. Cela accroît considérablement le coût des mires et/ou le coût d'une opération d'étalonnage et réserve l'utilisation des mires à des opérations de maintenance. Le document WO 2014/167248 décrit un dispositif d'inspection optique. Les documents US 2015/103147 et US 2004/233290 décrivent chacun un système d'étalonnage d'une caméra.

### Résumé

Il serait souhaitable de disposer d'une mire d'étalonnage qui puisse être intégrée dans l'installation de prise de vues. Pour cela, il serait souhaitable de disposer d'une mire d'étalonnage et/ou de test à faible coût par rapport aux mires de maintenance.

Un objet d'un mode de réalisation est de proposer une mire d'étalonnage adaptée à des installations d'inspection optique.

Un autre objet d'un mode de réalisation est une mire d'étalonnage adaptée à équiper l'installation en permanence pour une utilisation périodique.

Pour atteindre tout ou partie de ces objets ainsi que d'autres, un mode de réalisation prévoit une installation d'inspection optique selon les revendications jointes.

Selon un mode de réalisation, l'installation comprend, en outre, un système de convoyage dudit objet.

Selon un mode de réalisation, l'objet à inspecter est une carte électronique.

Selon un mode de réalisation, le système de commande est adapté à déterminer une image tridimensionnelle de l'objet à partir d'images acquises par la caméra.

Selon un mode de réalisation, l'installation comprend, en outre, au moins un projecteur de motifs lumineux sur ledit objet.

Selon un mode de réalisation, l'installation comprend un châssis et le système de déplacement comprend un dispositif de déplacement de la caméra par rapport au châssis.

Selon un mode de réalisation, le système de déplacement comprend un dispositif de déplacement et/ou d'inclinaison de l'écran d'affichage par rapport au châssis.

Un autre mode de réalisation prévoit un procédé de commande d'une installation d'inspection optique d'un objet, selon les revendications jointes.

Selon un mode de réalisation, le procédé comprend l'affichage de plusieurs images successives sur l'écran d'affichage.

Selon un mode de réalisation, l'opération est un étalonnage géométrique de la caméra.

Selon un mode de réalisation, l'image affichée est une image d'une carte électronique.

Selon un mode de réalisation, l'opération est un test de la netteté de la caméra.

Selon un mode de réalisation, l'opération est un étalonnage radiométrique de la caméra.

Selon un mode de réalisation, l'installation d'inspection optique comprend un châssis et le procédé comprend en outre le déplacement et/ou l'inclinaison de l'écran d'affichage par rapport au châssis.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en perspective, partielle et schématique, d'un mode de réalisation d'une installation d'inspection optique ;
les figures 2 et 3 sont respectivement une vue en coupe droite et une vue de dessus, partielles et schématiques, de l'installation d'inspection optique représentée en figure 1 ;
la figure 4 est un schéma-bloc d'un mode de réalisation d'un procédé de commande de l'installation d'inspection optique de la figure 1 ;
la figure 5 est un exemple d'une image affichée lors de la mise en oeuvre d'un mode de réalisation d'un procédé de commande de l'installation d'inspection optique de la figure 1 ; et
la figure 6 est une vue de dessus, partielle et schématique, d'un autre mode de réalisation d'une installation d'inspection optique.

### Description détaillée

De mêmes éléments ont été désignés par de mêmes références aux différentes figures. Par souci de clarté, seuls les étapes et éléments utiles à la compréhension des modes de réalisation qui vont être décrits ont été représentés et sont détaillés. En particulier, les processus d'inspection optique n'ont pas été détaillés, la mire d'étalonnage et/ou de test qui va être décrite par la suite étant compatible avec toute installation d'inspection optique et, plus généralement, avec tout système de prise de vues. Dans la suite de la description, un pixel d'une image correspond à l'élément unitaire de l'image. Pour l'affichage de chaque pixel de l'image, l'écran d'affichage comprend en général au moins trois sources lumineuses, également appelées pixels d'affichage colorés, qui émettent chacune un rayonnement lumineux sensiblement dans une seule couleur (par exemple, le rouge, le vert et le bleu). La superposition des rayonnements émis par ces trois pixels d'affichage fournit à l'observateur la sensation colorée correspondant au pixel de l'image affichée.

Sauf précision contraire, les expressions "approximativement", "sensiblement", et "de l'ordre de" signifient à 10 % près, de préférence à 5 % près.

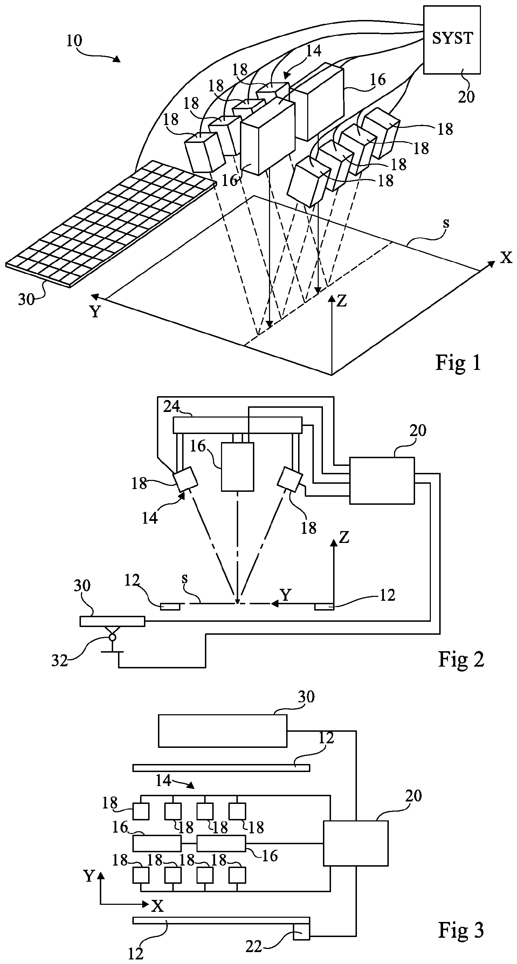

Les figures 1, 2 et 3 représentent, de façon partielle et schématique, un mode de réalisation d'une installation d'inspection optique 10, par exemple pour cartes de circuits électroniques. Les cartes à inspecter sont, par exemple, convoyées selon une direction X sur une scène S, par exemple par des courroies de convoyage 12, représentées de façon schématique seulement sur les figures 2 et 3. Dans ce mode de réalisation, l'installation 10 comprend un bloc 14 projecteurs-caméras comprenant deux projecteurs 16 d'images sur la scène S et deux groupes de quatre caméras 18 alignées selon deux droites parallèles dans une direction Y, par exemple perpendiculaire à la direction X. Toutefois, le nombre de projecteurs 16 et de caméras 18 et leurs dispositions peuvent être différents de ceux décrits dans le présent mode de réalisation. On appelle Z la direction perpendiculaire aux directions X et Y. Les directions X, Y et Z constituent un repère fixe par rapport au châssis, non représenté, de l'installation d'inspection optique 10. Le plan de coupe de la figure 2 est parallèle au plan (Y, Z). Les caméras 18 et les projecteurs 16 sont reliés à un système 20 (SYST) de commande et d'exploitation des images numériques prises. Le système 20 peut correspondre à un circuit électronique dédié ou comprendre un processeur adapté à exécuter des instructions d'un programme d'ordinateur stockées dans une mémoire. Le système 20 est, en outre, adapté à commander au moins un moteur 22, représenté seulement en figure 3, d'entraînement des courroies 12. Selon un mode de réalisation, l'installation 10 comprend un système 24 de support, représenté de façon schématique seulement en figure 2, du bloc 14 projecteurs-caméras, adapté à déplacer le bloc 14 projecteurs-caméras, notamment en translation selon la direction Y.

L'installation d'inspection optique 10 comprend, en outre, un écran d'affichage 30 relié au système de commande 20. Le système de commande 20 est adapté à commander l'affichage sur l'écran d'affichage 30 d'images qui sont utilisées lors d'un procédé d'étalonnage et/ou de test de l'installation 10. L'écran d'affichage 30 peut être un écran à cristaux liquides, un écran plasma ou un écran à diodes électroluminescentes. L'écran d'affichage 30 est maintenu par un système de support 32, représenté de façon schématique seulement en figure 2, commandé par le système de commande 20. Selon un mode de réalisation, le dispositif de support 32 est adapté à faire pivoter l'écran d'affichage 30 au moins autour de l'axe X. De préférence, le dispositif de support 32 est, en outre, adapté à déplacer l'écran d'affichage 30 au moins selon la direction Z.

Selon un mode de réalisation, la résolution de l'écran d'affichage 30 est supérieure ou égale à 20 pixels d'affichage par centimètre, de préférence supérieure ou égale à 30 pixels d'affichage par centimètre. Les dimensions de l'écran d'affichage sont adaptées au type de procédé d'étalonnage et/ou de test devant être mis en oeuvre. Selon un mode de réalisation, les dimensions de l'écran d'affichage 30 sont suffisantes pour qu'en amenant le bloc 14 projecteurs-caméras à un ensemble de positions par rapport à l'écran d'affichage 30, chaque pixel de chaque caméra 18 voit, au moins à l'une de ces positions, au moins une partie de l'image affichée sur l'écran d'affichage 30. Les dimensions de l'écran 30 sont telles qu'il occupe au moins 75 % du champ de vue du bloc 14 projecteurs-caméras, de préférence plus de 150 % du champ de vue du bloc 14 projecteurs-caméras. A titre d'exemple, les dimensions de l'écran d'affichage sont supérieures ou égales à 380 mm par 60 mm, de préférence supérieures ou égales à 450 mm par 100 mm. Dans le présent mode de réalisation, l'écran d'affichage 30 est situé en dehors de la scène S où sont transportés les objets à inspecter.

En fonctionnement normal, l'objet à inspecter est transporté sur la scène. Des motifs lumineux sont projetés par les projecteurs 16 sur l'objet et des images de l'objet sont acquises par les caméras 18. A titre d'exemple, le système 20 est adapté à déterminer une image tridimensionnelle de l'objet disposé à partir des images de l'objet acquises par les caméras 18.

La mise en oeuvre d'un procédé d'étalonnage et/ou de test peut comprendre le déplacement du bloc 14 projecteurs-caméras jusqu'à venir à l'aplomb de l'écran d'affichage 30 et l'affichage sur l'écran d'affichage 30 d'au moins une image, de préférence de deux images ou de plus de deux images, pour réaliser une opération d'étalonnage et/ou de test. Les images affichées peuvent représenter des mires d'étalonnage et/ou de test. Un avantage est que le même écran d'affichage 30 peut être utilisé à la place de plusieurs mires d'étalonnage différentes. Un autre avantage est la précision de fabrication de l'écran d'affichage 30 qui est supérieure à celles des mires classiques. Un autre avantage de l'utilisation d'un écran d'affichage est que l'image affichée est moins perturbée par les conditions d'éclairage ambiant que dans le cas d'une image qui serait imprimée sur un support. Un autre avantage est que l'écran d'affichage 30 reste dans l'installation 10 de sorte que des opérations d'étalonnage et/ou de test peuvent être réalisées de façon régulière. Un autre avantage est que l'écran d'affichage 30 à un coût réduit.

Chaque caméra 18 peut comprendre une matrice de photodétecteurs répartis en rangées et en colonnes. Chaque photodétecteur est adapté à fournir un signal de détection représentatif de la quantité de lumière qu'il a reçu pendant une durée d'exposition. L'acquisition d'une image par une caméra comprend la lecture du signal de détection fourni par chaque photodétecteur. Selon un mode de réalisation, au moins l'une des caméras 18 est du type à lecture rangée par rangée, c'est-à-dire que la lecture des signaux de détection est réalisée une rangée de photodétecteurs après l'autre. Dans ce cas, de façon avantageuse, l'écran d'affichage 30 est piloté pour qu'il n'y ait pas une image affichée en permanence mais que, au contraire, une phase d'affichage d'image soit suivie d'une phase d'absence d'affichage d'image. Les phases d'affichage et d'absence d'affichage sont adaptées pour que la durée d'exposition de chaque rangée de pixels à une même image soit sensiblement identique.

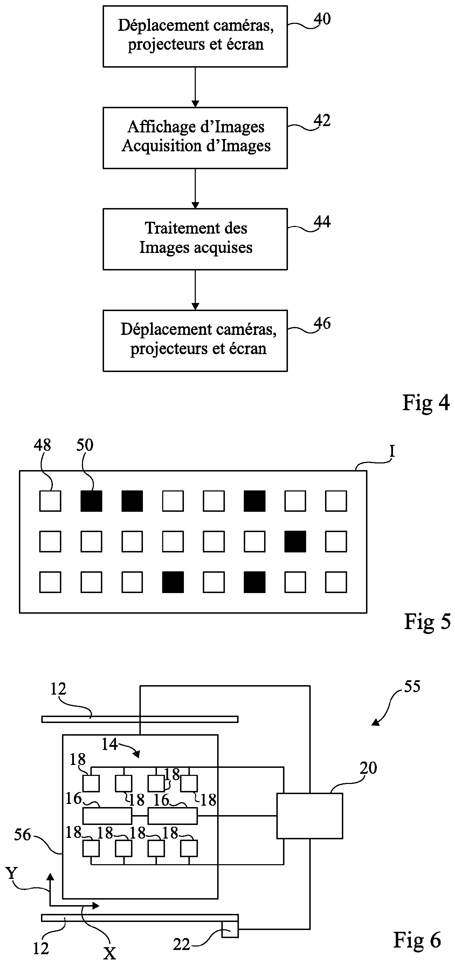

La figure 4 est un schéma-bloc d'un mode de réalisation d'un procédé d'étalonnage.

A l'étape 40, le système 20 commande le déplacement du bloc 14 projecteurs-caméras jusqu'à venir à l'aplomb de l'écran d'affichage 30. A cette étape, le système 20 peut, en outre, commander le support 32 pour déplacer l'écran d'affichage 30 afin d'amener la face avant de l'écran d'affichage 30 à la position souhaitée (angle et/ou niveau). Le procédé se poursuit à l'étape 42.

A l'étape 42, le système 20 commande l'affichage d'au moins une image, de préférence d'au moins deux images, plus préférentiellement d'au moins trois images successives sur l'écran d'affichage et l'acquisition par chaque caméra 18 d'au moins une image pour chaque image affichée. Le procédé se poursuit à l'étape 44. Les acquisitions peuvent différer les unes des autres par l'image affichée et/ou par la position du bloc 14 projecteurs-caméras et/ou de l'écran d'affichage 30. A titre d'exemple, pour une même image affichée, plusieurs acquisitions peuvent être réalisées, la position du bloc 14 projecteurs-caméras étant différente entre les acquisitions de la même image et/ou la position de l'écran d'affichage 30 étant différente entre les acquisitions. A titre d'exemple, il peut être affiché une série de plusieurs images à une première position du bloc 14 projecteurs-caméras et de l'écran d'affichage 30, puis la même série d'images ou une autre série d'images à une deuxième position du bloc 14 projecteurs-caméras et de l'écran 30.

A l'étape 44, le système 20 réalise l'opération d'étalonnage et/ou de test souhaitée à partir d'un traitement des images acquises. Le procédé se poursuit à l'étape 46.

A l'étape 46, le système 20 commande le déplacement du bloc 14 projecteurs-caméras et/ou le déplacement de l'écran d'affichage 30 jusqu'à une position normale de fonctionnement de l'installation d'inspection optique 10. L'étape 46 peut être réalisée au moins en partie simultanément à l'étape 44.

Selon un mode de réalisation, les images affichées sur l'écran d'affichage 30 et acquises par les caméras 18 à l'étape 42 sont adaptées à la réalisation d'un étalonnage géométrique des caméras 18 à l'étape 44. Une opération d'étalonnage géométrique peut comprendre l'estimation, pour chaque caméra 18, des valeurs de paramètres d'un modèle mathématique équivalent de la caméra 18 qui fait correspondre à chaque point de la scène S un point correspondant dans le plan des photodétecteurs de la caméra 18. Le modèle mathématique est utilisé lors du fonctionnement normal de l'installation d'inspection optique 10. Selon le modèle mathématique de la caméra 18 utilisé, les paramètres peuvent comprendre des paramètres intrinsèques tels que le point principal, la distance focale de la caméra 18 selon différents axes, le paramètre d'inclinaison (en anglais "skew") de la caméra 18 et des paramètres extrinsèques tels que la matrice de translation et la matrice de rotation de la transformation géométrique entre un système de coordonnées de référence fixe par rapport au bloc 14 projecteurs-caméras et un système de coordonnées lié à la caméra 18. A titre de variante, une opération d'étalonnage géométrique peut comprendre la détermination, pour chaque caméra 18, d'une table de correspondance qui fait correspondre à un ensemble de points de la scène S des points de l'image acquise par la caméra 18.

Pour une opération d'étalonnage géométrique des caméras 18, l'image affichée sur l'écran d'affichage 30 peut comprendre des motifs permettant la détermination de points de référence précis de l'image affichée dont les positions par rapport au système de coordonnées de référence sont connues. A titre d'exemple, chaque motif correspond à un point noir sur fond blanc, à une croix ou à un carré. A titre d'exemple, lorsque le motif correspond à une croix, le point de référence associé peut correspondre au point d'intersection de la croix et lorsque le motif correspond à un carré, le point de référence associé peut correspondre au centre du carré.

L'opération d'étalonnage géométrique d'une caméra 18 peut comprendre une étape dans laquelle on détermine, pour chaque point de référence de l'image affichée, le point correspondant dans l'image acquise par la caméra 18. Lorsque l'image affichée comprend un grand nombre de points de référence, il peut être difficile de mettre en correspondance de façon simple les points de référence de l'image affichée et les points correspondants de l'image acquise. Dans le cas d'une mire classique, il est généralement prévu, en plus des points de référence, un motif unique facilement identifiable sur l'image acquise. L'identification des points de référence est alors réalisée en comparant leurs positions respectives par rapport au motif unique, ce qui peut être une opération délicate.

Selon un mode de réalisation, le procédé d'étalonnage géométrique comprend l'affichage de plusieurs images successives et pour chaque image affichée, l'acquisition d'une image par chaque caméra 18. Chaque image affichée comprend, en outre, pour chaque point de référence, l'affichage de l'un ou l'autre d'un premier motif ou d'un deuxième motif.

La figure 5 représente un mode de réalisation d'une image I affichée sur l'écran d'affichage 30 et qui comprend des carrés 48 blancs à bords noir et des carrés 50 noirs. A titre d'exemple, un point de référence correspond au centre de chaque carré 48 ou 50. Le premier motif, par exemple le carré blanc 48, correspond à la valeur logique "1" et le deuxième motif, par exemple le carré noir 50, correspond à la valeur logique "0". L'affichage de plusieurs images successives sur l'écran d'affichage 30 avec, pour chaque point de référence, l'affichage d'un carré blanc ou noir, permet la transmission d'un signal numérique pour chaque point de référence comprenant une succession valeurs logiques "1" et "0". Le signal numérique peut correspondre à un code qui permet d'identifier le point de référence sur l'image affichée. L'analyse des images acquises par chaque caméra 18 permet la détermination du signal numérique pour chaque point de référence sur les images acquises. Un avantage d'un tel procédé est qu'il permet d'identifier directement chaque point de référence sans nécessiter la détermination de la position relative du point de référence par rapport à un motif unique. La fiabilité du procédé de détermination des points de référence est alors augmentée.

Selon un mode de réalisation, l'image affichée est une image pseudo-aléatoire déterminée de façon que, quel que soit le point de référence de l'image affichée et une partie de l'image sélectionnée dans une fenêtre autour du point de référence, il n'y a pas deux parties de l'image qui soient identiques. Pour chaque caméra 18, dans l'image acquise par la caméra 18, le système 20 est adapté à déterminer le pixel de l'image acquise correspondant à chaque point de référence de l'image affichée en recherchant le pixel de l'image acquise associée avec la même partie d'image que le point de référence de l'image affichée tout en tenant compte des déformations de l'image acquise par rapport à l'image affichée du fait de l'inclinaison de la caméra.

Selon un mode de réalisation, les images affichées sur l'écran d'affichage 30 à l'étape 42 et acquises par les caméras 18 sont adaptées à la réalisation d'une estimation de la netteté de chaque caméra 18. Selon un mode de réalisation, le procédé comprend l'affichage sur l'écran d'affichage 30 d'au moins une image comprenant une alternance de lignes noires et de lignes blanches. Le traitement des images acquises par chaque caméra 18 peut correspondre à un procédé classique d'estimation de la netteté de chaque caméra 18 utilisant une mire physique de même apparence. Selon un mode de réalisation, plusieurs images sont affichées de façon successive en modifiant l'orientation des lignes affichées d'une image à l'autre. Ceci permet, de façon avantageuse d'estimer la netteté de chaque caméra 18 selon différentes directions.

Selon un mode de réalisation, chaque pixel d'affichage de l'écran d'affichage comprend une zone active depuis laquelle est émis la majorité du rayonnement fourni par le pixel d'affichage et une zone inactive qui n'émet sensiblement pas de rayonnement. De préférence, les zones inactives des pixels d'affichage d'une même rangée ou d'une même colonne sont alignées. Ceci permet de tenir compte des lignes formées par les zones inactives des pixels d'affichage dans l'image affichée pour l'estimation de la netteté de la caméra et d'augmenter la résolution de l'image affichée par rapport à la résolution de l'écran d'affichage 30.

Selon un mode de réalisation, les images affichées sur l'écran d'affichage 30 à l'étape 42 et acquises par les caméras 18 sont adaptées à la réalisation d'un diagnostic des caméras 18 à l'étape 44. Un diagnostic peut comprendre la caractérisation de défauts de chaque caméra 18. Un exemple de défaut correspond à la présence de photodétecteurs de la caméra 18 qui ne fonctionnent plus et qui se traduisent par des pixels noirs sur les images acquises. Un autre exemple de défaut correspond à des différences entre les gains d'amplification des photodétecteurs, d'où il résulte que l'image acquise à partir d'une image uniformément grise affichée sur l'écran d'affichage 30 peut ne pas être uniformément grise. L'écran d'affichage 30 permet l'affichage de plusieurs images pour caractériser les défauts de chaque caméra 30.

Selon un mode de réalisation, les images affichées sur l'écran d'affichage 30 à l'étape 42 et acquises par les caméras 18 sont adaptées à la réalisation d'un étalonnage radiométrique de chaque caméra 18 à l'étape 44. Il peut être avantageux, dans ce cas, de prévoir un étalonnage régulier de l'écran d'affichage, par exemple en utilisant une sonde d'étalonnage.

Selon un mode de réalisation, les images affichées sur l'écran d'affichage 30 à l'étape 42 et acquises par les caméras 18 sont adaptées à la réalisation de tests du procédé de traitement des images acquises par les caméras 18 mis en oeuvre par le système 20 en fonctionnement normal. Un exemple de test classique comprend l'acquisition d'images par les caméras 18 d'une carte électronique réelle connue dédiée au test. Un inconvénient est que la structure de la carte électronique de test ne peut pas être connue parfaitement. En outre, différentes cartes électroniques de test doivent être utilisées selon les aspects du procédé de traitement à tester. Le nombre de cartes électroniques de test disponibles est néanmoins nécessairement limité. Selon un mode de réalisation, l'image affichée par l'écran d'affichage 30 peut correspondre à l'image conçue par ordinateur d'une carte électronique de test. Par rapport à un test qui comprend l'acquisition d'images d'une carte électronique réelle, l'affichage d'images d'une carte électronique factice conçue par ordinateur permet, de façon avantageuse, d'afficher des images qui sont parfaitement connues et qui peuvent être modifiées facilement selon les tests à réaliser.

La figure 6 représente, de façon partielle et schématique, un autre mode de réalisation d'une installation d'inspection optique 55. L'installation d'inspection optique 55 comprend l'ensemble des éléments de l'installation d'inspection optique 10 représentée en figure 1 à la différence que l'écran d'affichage 30 est remplacé par un écran d'affichage 56 qui s'étend sous la totalité de la scène. Les dimensions des images affichées par l'écran d'affichage 56 peuvent être de 60 cm par 60 cm. Les dimensions importantes des images affichées par l'écran d'affichage 56 permettent qu'une partie de l'image affichée soit toujours dans le champ de vision des caméras 18 quelle que soit la position du bloc 14 projecteurs-caméras par rapport à la scène S. Selon un mode de réalisation, les images affichées sur l'écran d'affichage 56 sont adaptées pour tester si le procédé de commande des déplacements du bloc 14 projecteurs-caméras fonctionne de façon correcte. Dans ce but, l'image affichée peut comprendre des motifs, chaque motif permettant l'identification de points de référence précis de l'image affichée.

Divers modes de réalisation avec diverses variantes ont été décrits ci-dessus. On note que l'homme de l'art peut combiner divers éléments de ces divers modes de réalisation et variantes sans faire preuve d'activité inventive. En particulier, une installation optique peut comprendre l'écran d'affichage 30 décrit précédemment en relation avec les figures 1 à 3 et l'écran d'affichage 56 décrit précédemment en relation avec la figure 6, les écrans d'affichage 30, 56 étant utilisés pour des opérations d'étalonnage différentes.

## Revendications

1. Installation (10 ; 55) d'inspection optique d'un objet comprenant :
au moins une caméra (18) ;
un écran (30 ; 56) d'affichage de plusieurs images successives, chaque image affichée comprenant, à chaque point de référence de l'image affichée parmi des points de référence, l'affichage de l'un ou l'autre d'un premier motif ou d'un deuxième motif ;
un système (24, 32) de déplacement de l'écran d'affichage et/ou de la caméra adapté à amener l'écran d'affichage dans le champ de vision de la caméra ; et
un système (20) de commande de l'écran d'affichage et de la caméra pour l'acquisition par la caméra d'au moins une image pour chaque image affichée par l'écran d'affichage, le système de commande étant adapté à réaliser un traitement des images acquises pour une opération d'étalonnage de l'installation d'inspection optique comprenant la détermination d'un signal numérique pour chaque point de référence comprenant une succession valeurs logiques "1" et "0" correspondant à un code d'identification du point de référence.

2. Installation d'inspection optique selon la revendication 1, comprenant, en outre, un système (12, 22) de convoyage dudit objet.

3. Installation selon la revendication 1 ou 2, dans laquelle l'objet à inspecter est une carte électronique.

4. Installation d'inspection optique selon l'une quelconque des revendications 1 à 3, dans laquelle le système de commande (20) est adapté à déterminer une image tridimensionnelle de l'objet à partir d'images acquises par la caméra.

5. Installation d'inspection optique selon l'une quelconque des revendications 1 à 4, comprenant, en outre, au moins un projecteur (14) de motifs lumineux sur ledit objet.

6. Installation d'inspection optique selon l'une quelconque des revendications 1 à 5, comprenant un châssis et dans laquelle le système de déplacement comprend un dispositif de déplacement de la caméra (18) par rapport au châssis.

7. Installation d'inspection optique selon la revendication 6, dans laquelle le système de déplacement comprend un dispositif de déplacement et/ou d'inclinaison de l'écran d'affichage (30) par rapport au châssis.

8. Procédé de commande d'une installation d'inspection optique (10 ; 55) d'un objet, ladite installation comprenant au moins une caméra (18) et un écran d'affichage (30 ; 56), le procédé comprenant les étapes suivantes :
déplacer l'écran d'affichage et/ou la caméra pour amener l'écran d'affichage dans le champ de vision de la caméra ;
afficher plusieurs images (I) successives sur l'écran d'affichage, chaque image affichée comprenant, à chaque point de référence de l'image affichée parmi des points de référence, l'affichage de l'un ou l'autre d'un premier motif ou d'un deuxième motif ;
réaliser, pour chaque image affichée, au moins une acquisition d'une image par la caméra ; et
réaliser un traitement des images acquises pour une opération d'étalonnage de l'installation d'inspection optique comprenant la détermination d'un signal numérique pour chaque point de référence comprenant une succession valeurs logiques "1" et "0" correspondant à un code d'identification du point de référence.

9. Procédé selon la revendication 8, dans lequel l'opération est un étalonnage géométrique de la caméra (18).

10. Procédé selon la revendication 8, dans lequel l'image affichée est une image d'une carte électronique.

11. Procédé selon la revendication 8, dans lequel l'opération est un étalonnage radiométrique de la caméra (18).

12. Procédé selon l'une quelconque des revendications 8 à 11, dans lequel l'installation d'inspection optique (10 ; 55) comprend un châssis et dans lequel le procédé comprend en outre le déplacement et/ou l'inclinaison de l'écran d'affichage (30) par rapport au châssis.

## Patentansprüche

1. Anlage (10; 55) für die optische Inspektion eines Objekts, die Folgendes aufweist:
mindestens eine Kamera (18);
einen Bildschirm (30; 56) zur Anzeige mehrerer aufeinanderfolgender Bilder, wobei jedes angezeigte Bild an jedem Bezugspunkt des angezeigten Bildes unter den Bezugspunkten die Anzeige eines oder eines anderen Musters aus einem ersten Musters oder einem zweiten Musters aufweist;
ein System (24, 32) zum Versetzen des Anzeigebildschirms und/oder der Kamera, um den Anzeigebildschirm in das Sichtfeld der Kamera zu bringen;
ein System (20) zum Steuern des Anzeigebildschirms und der Kamera, um durch die Kamera mindestens ein Bild für jedes auf dem Anzeigebildschirm angezeigte Bild zu erfassen, wobei das Steuersystem dazu bestimmt ist, die erfassten Bilder für einen Kalibrierungsvorgang des optischen Inspektionssystems zu verarbeiten, was die Bestimmung eines digitalen Signals für jeden Bezugspunkt aufweisend eine Folge von logischen Werten "1" und "0" aufweist, die einem Identifikationscode für den Bezugspunkt entsprechen.

2. Optische Inspektionsanlage nach Anspruch 1, die ferner ein System (12, 22) zum Überführen des Objekts aufweist.

3. Anlage nach Anspruch 1 oder 2, wobei das zu inspizierende Objekt eine elektronische Karte ist.

4. Optische Inspektionsanlage nach einem der Ansprüche 1 bis 3, wobei das Steuerungssystem (20) dazu ausgebildet ist, aus den von der Kamera aufgenommenen Bildern ein dreidimensionales Bild des Objekts zu ermitteln.

5. Optische Inspektionsanlage nach einem der Ansprüche 1 bis 4, ferner aufweisend mindestens einen Projektor (14) für Leuchtmuster auf dem Objekt.

6. Optische Inspektionsanlage nach einem der Ansprüche 1 bis 5, aufweisend ein Fahrgestell, wobei der das Versatzsystem eine Vorrichtung zum Versetzen der Kamera (18) relativ zum Fahrgestell aufweist.

7. Optische Inspektionsanlage nach Anspruch 6, wobei das Versatzsystem eine Vorrichtung zum Versetzen und/oder Kippen des Bildschirms (30) relativ zum Fahrgestell aufweist.

8. Verfahren zur Steuerung einer Anlage (10; 55) für die optische Inspektion eines Objekts, wobei die Anlage mindestens eine Kamera (18) und einen Bildschirm (30; 56) aufweist, wobei das Verfahren die folgenden Schritte aufweist:
Versetzen des Bildschirms und/oder der Kamera, um den Bildschirm in das Sichtfeld der Kamera zu bringen;
Anzeigen mehrerer aufeinanderfolgender Bilder (I) auf dem Bildschirm, wobei jedes Bild an jedem Bezugspunkt des angezeigten Bildes unter den Bezugspunkten die Anzeige eines oder eines anderen Musters aus einem ersten Musters oder einem zweiten Musters aufweist,
für jedes angezeigte Bild, Erfassen mindestens eines Bildes von der Kamera; und
Verarbeiten der für einen Kalibrierungsvorgang der optischen Inspektionsanlage erfassten Bilder, aufweisend die Bestimmung eines digitalen Signals für jeden Bezugspunkt, was eine Folge von logischen Werten "1" und "0" aufweist, die einem Identifikationscode des Bezugspunkts entsprechen.

9. Verfahren nach Anspruch 8, wobei der Vorgang die geometrische Kalibrierung der Kamera (18) ist.

10. Verfahren nach Anspruch 8, wobei das angezeigte Bild das Bild einer elektronischen Karte ist.

11. Verfahren nach Anspruch 8, wobei der Vorgang die radiometrische Kalibrierung der Kamera (18) ist.

12. Verfahren nach einem der Ansprüche 8 bis 11, wobei die optische Inspektionsanlage (10; 55) ein Fahrgestell aufweist und wobei das Verfahren außerdem das Versetzen und/oder Kippen des Bildschirms (30) relativ zum Fahrgestell aufweist.

## Claims

1. Installation (10 ; 55) for the optical inspection of an object comprising:
at least one camera (18);
A screen (30 ; 56) to display several successive images, each displayed image comprising at each reference point of the displayed image among the reference points, the display of one or other of a first pattern or a second pattern;
A system (24, 32) for displacing the display screen and/or the camera designed to bring the display screen to within the field of view of the camera;
a system (20) for controlling the display screen and the camera, for the acquisition by the camera of at least one image for each image displayed on the display screen, the control system being designed to process the images acquired for a calibration operation on the optical inspection system comprising the determination of a digital signal for each reference point comprising a succession of logical values "1" and "0" corresponding to an identification code for the reference point.

2. Optical inspection installation according to claim 1, furthermore comprising a system (12, 22) for transferring the said object.

3. Installation according to claim 1 or 2 wherein the object to inspect is an electronic card.

4. Optical inspection installation according to any one of claims 1 to 3, wherein the control system (20) is designed to determine a three-dimensional image of the object from images acquired by the camera.

5. Optical inspection installation according to any one of claims 1 to 4, furthermore comprising at least one projector (14) of luminous patterns on the said object.

6. Optical inspection installation according to any one of claims 1 to 5 comprising a chassis and in which the displacement system comprises a device for displacing the camera (18) relative to the chassis.

7. Optical inspection installation according to claim 6, wherein the displacement system comprises a device for displacing and/or tilting the display screen (30) relative to the chassis.

8. Control process for an optical installation (10 ; 55) for inspecting an object, the said installation comprising at least one camera (18) and a display screen (30 ; 56), the process comprising the following steps:
displace the display screen and/or the camera to bring the display screen to within the field of view of the camera;
display several successive images (I) on the display screen, each image comprising, at each reference point of the displayed image among the reference points, the display of one or other of a first pattern or a second pattern;
for each displayed image, acquire at least one image by the camera; and
process the images acquired for a calibration operation of the optical inspection installation comprising the determination of a digital signal for each reference point comprising a succession of logical values "1" and "0" corresponding to an identification code of the reference point.

9. Process according to claim 8, wherein the operation is the geometric calibration of the camera (18) .

10. Process according to claim 8, wherein the displayed image is an image of an electronic card.

11. Process according to claim 8, wherein the operation is the radiometric calibration of the camera (18) .

12. Process according to any one of claims 8 to 11, wherein the optical inspection installation (10 ; 55) comprises a chassis and wherein the process furthermore comprises the displacement and/or tilting of the display screen (30) relative to the chassis.
